# EUROPEAN PATENT SPECIFICATION

(11) **EP 2 484 805 B1**
(45) Date of publication and mention of the grant of the patent: **20.07.2016**
(21) Application number: 12153577.7
(22) Date of filing: 02.02.2012
(51) Int. Cl.: C23C 24/08, B22F 3/11, B22F 7/00, B01D 39/20, B82Y 30/00

(54) **A method of making sinter bonded porous metallic coatings**
Verfahren zur Herstellung durch Sintern gebundene poröse metallische Beschichtungen
Procédé de farbication de revêtements métalliques poreux à liaison de frittage

(30) Priority: 03.02.2011 US 201161439176 P
(43) Date of publication of application: 08.08.2012
(73) Proprietor: Mott Corporation, Farmington CT 06032-3159 (US)
(72) Inventor: Steele, James K., Rockfall, CT Connecticut 06481 (US); White, Wayne F., Granby, CT Connecticut 06035 (US); Romano, Alfred M., Terryville, CT Connecticut 06786 (US); Rubow, Kenneth L., Avon, CT Connecticut 06001 (US)
(74) Representative: Klunker . Schmitt-Nilson . Hirsch

(56) References cited:
- WO-A1-00/39358
- WO-A2-2004/054625
- WO-A2-2008/051434
- JP-A- 61 244 025
- US-A1- 2008 081 007

## Description

Disclosed herein is a method to form a porous metallic coating on a substrate. More particularly, a suspension of nanosize particles in a carrier fluid is deposited on the substrate and heated to evaporate the carrier fluid while sintering the particles to the substrate.

There are numerous applications requiring a porous open cell structure including filtration and gas or liquid flow control. These structures are typically formed by compacting metallic or ceramic particles to form a green compact and then sintering to form a coherent porous structure. Particle size, compaction force, sintering time and sintering temperature all influence the pore size and the structure strength. When the pore size is relatively large, such as microsize (having an average diameter of one micron (µm) or greater), the structure thickness relative to pore size is modest for sufficient strength to be handled and utilized in industrial applications. When the pore size is relatively small, such as nanosize (having an average diameter of less than one micron), the structure thickness is much greater than pore size for sufficient strength to be handled and utilized in industrial applications. As a result, the structure has high resistance to passing a gas or liquid through the long length, small diameter pores and there is a high pressure drop across the filter. Note that for this application, the diameter is to be measured along the longest axis passing from one side of a particle to the other side and also passing through the particle center.

A number of patents disclose methods for depositing a porous coating on a substrate. U.S. Patent No. 6,544,472 discloses a method for depositing a porous surface on an orthopedic implant. Metallic particles are suspended in a carrier fluid. The carrier fluid may contain water, gelatin (as a binder) and optionally glycerin (as a viscosity enhancer). Evaporation of the water results in the metallic particles being suspended in a gelatinous binder. Heating converts the gelatin to carbon and sinters the metallic particles to the substrate.

U.S. Patent No. 6,652,804 discloses a method for the manufacture of a thin openly porous metallic film. Metal particles with an average particle diameter between one micron and 50 microns are suspended in a carrier fluid having as a primary component an alcohol, such as ethanol or isopropanol, and a binder. This suspension is applied to a substrate and heated to evaporate the alcohol component. A green film of microparticles suspended in the binder is then removed from the substrate and heated to a temperature effective to decompose the binder and sinter the metallic particles.

U.S. Patent No. 6,709,622 discloses a porous structure formed by mechanical attrition of metal or ceramic particles to nanosize and then combining the nanosized particles with a binder, such as a mixture of polyethylene and paraffin wax to form a green part. The green part is then heated to a temperature effective to decompose the binder and sinter the particles.

In addition to the thickness constraint discussed above, the inclusion of a binder and optional viscosity enhancer may further increase the pressure drop across a structure. During sintering, the binder and viscosity enhancer decompose, typically to carbon. This carbonatious residue may in whole or in part block a significant number of pores necessitating a high pressure drop across the structure to support adequate flow.

WO 2008/051434 A2 discloses a method for coating a substrate, the method comprising (a) forming a suspension of sinterable particles in a carrier fluid, (b) maintaining the suspension, for example by imparting ultrasonic vibrations, (c) transferring the suspension to an ultrasonic spray nozzle, (d) spraying a coating of the suspension onto the substrate, and (e) sintering the sinterable particles to the substrate thereby forming a coated substrate.

WO 2004/054625 A2 discloses a method for forming a porous composite material. A powdered nanoparticle material is suspended into a fluid to form a slurry or a liquid suspension. The liquid suspension is made into an aerosol using an ultrasonic atomizer and sprayed onto a porous substrate, thereby forming a layer of nanoparticles. The layer of nano-particle material atop the porous substrate base maybe sintered to form a sintered porous nanoparticle material layer.

US 2008/0081007 A1 discloses a method for forming a porous coating on a substrate, comprising the steps of (a) forming a suspension of sinterable particles in a carrier fluid and containing said suspension in a reservoir, (b) maintaining said suspension by agitation in said reservoir, (c) transferring said suspension to a fine spray nozzle, (d) applying a first coating of said suspension to said substrate, and (e) sintering said sinterable particles to said substrate thereby forming a coated substrate.

WO 00/39358 discloses a method for applying a thin coating material onto a substrate, said method comprising suspending ceramic material particles in a solvent to form a colloidal suspension, heating a substrate to produce a heated substrate, dispersing the particles onto the heated substrate, for example by ultrasonically spraying the colloidal suspension onto the substrate, in order to deposit a particle layer on the substrate, and sintering said particle layer to the substrate.

There remains, therefore, a need for a method to deposit a thin nano powder layer on a substrate that does not suffer from the disadvantages of the prior art. The present invention satisfies this need by providing methods as claimed in the independent claims. Embodiments of the invention are defined in the dependent claims. Accordingly, there is provided a method for forming a porous coating on a substrate. A thin coating of a nano powder material may be deposited onto a substrate having micropores. A first advantage of this feature is that the microporous substrate provides strength and structure support and the nano powder layer may be quite thin. As a result, a nanoporous material which has sufficient strength for handling and industrial processes is provided. Since the nano powder layer is thin, the pressure drop across the layer is substantially less than conventional thicker nano powder structures.

The details of one or more embodiments are set forth in the accompanying drawings and the description below. Other features, objects and advantages will be apparent from the description and drawings, and from the claims.
FIG. 1 illustrates in flow chart representation a method for depositing a porous coating.
FIG. 2 schematically illustrates a prior art system for depositing a porous coating.
FIG. 3 schematically illustrates a system for depositing the porous coating in accordance with the invention.
FIG. 4 schematically illustrates a system for depositing the porous coating on a tube.
FIG. 5 illustrates a porous tube suitable for gas flow regulation or filtration having a porous coating.
FIG. 6 is a scanning electron micrograph of a surface of the porous coating.
FIG. 7 is a scanning electron micrograph of a cross section of the porous coating of FIG. 4.
FIG. 8 graphically illustrates the effect of successive layers of the porous coating of FIG. 4 on the gas flux.
FIG. 9 illustrates a fuel cell component having a porous coating.
FIG. 10 illustrates a frit for use in a liquid chromatography column having a porous coating.
FIG. 11 illustrates a catalytic surface suitable for an industrial catalytic converter having a porous coating.
FIG. 12 illustrates an adhesively bonded composite having a porous coating effective to enhance adhesion.
FIG. 13 graphically illustrates isopropyl alcohol (IPA) liquid flow through 47 mm disk assemblies in accordance with Example 8.
FIG. 14 graphically illustrates nitrogen flow through 47 mm disk assemblies in accordance with Example 8.
FIGs. 15A and 15B are photomicrographs of a Media Grade 2 substrate coated with stainless steel nano particles by the process of Figure 3.
FIGs. 16A and 16B are photomicrographs of a tubular Media Grade 2 substrate coated with stainless steel nano particles by the process of Figure 4.
FIG. 17 graphically illustrates nitrogen flow through 12.7 mm (0.5 inch) OD coated tubes in accordance with Example 11.
FIG. 18 graphically illustrates IPA liquid flow through 12.7 mm (0.5 inch) OD coated tubes in accordance with Example 11.
Figure 19 is a photograph of a bio-pharmaceutical vent filter in accordance with Example 12.
Figure 20 is a photograph of small parts for sterilizing grade filtration in accordance with Example 13.

Like reference numbers and designations in the various drawings indicated like elements.

For purposes of this application, a "binder" is a carrier fluid component that remains after the carrier fluid is transformed from a liquid, such as by evaporation. A "viscosity enhancer" is a liquid that when added to the carrier fluid increases the viscosity of the carrier fluid beyond that of a primary component of the carrier fluid. A "suspension" is a mixture of a powder in a solvent. A "substrate" is a device or a part of a device to which the porous metallic coatings are applied. The substrate is typically porous, but may be solid in certain embodiments. A "nano powder coating" is the porous coating applied to the substrate from a powder having an average particle size of less than 10 microns.
(1 micron = 1 µm).

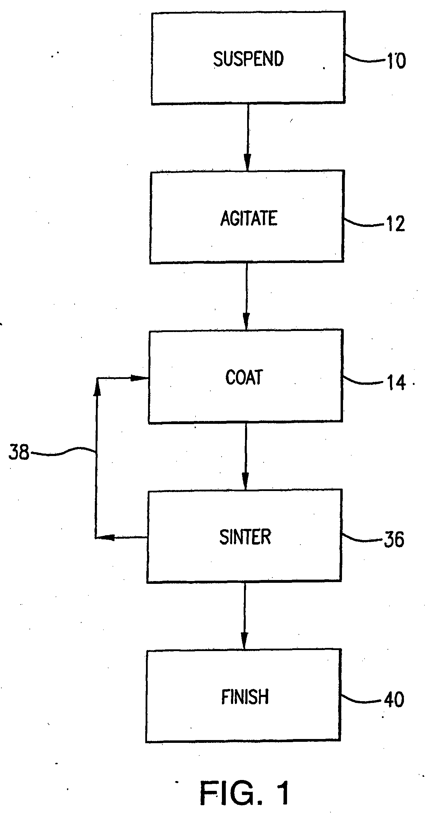

As illustrated in flowchart representation in Figure 1, the sinterable particles used to form a porous coating are suspended 10 in a carrier fluid. The concentration of sinterable particles is from 10 grams per liter to 50 grams per liter in the carrier fluid with a preferred concentration being about 25 grams per liter. The sinterable particles are typically nanosize and have an average maximum diameter sufficiently small to remain in solution in the carrier fluid in the presence of agitation without requiring an addition of a binder or viscosity enhancer. The sinterable particles preferably have an average maximum diameter of from 10 nanometers to 10 microns and more preferably have an average maximum diameter of from 10 nanometers to less than one micron. The sinterable particles are preferably metal or metal alloy powders but may also be other materials such as metal oxides and ceramics as long as such powders are capable of sinter bonding to each other and/or to a substrate. Preferred materials for the sinterable particles include stainless steel, nickel, cobalt, iron, copper, aluminum, palladium, titanium, platinum, silver, gold and their alloys and oxides. One particularly suitable alloy is Hastelloy C276 that has a nominal composition by weight of 15.5% chromium, 2.5% cobalt, 16.0% molybdenum, 3.7% tungsten, 15.0% iron, 1.0% manganese, 1.0% silicon, 0.03% carbon, 2.0% copper and the balance nickel.

The sinterable particles may be a mixture of materials. For example, a platinum powder may be mixed with 316L stainless steel, zinc, silver and tin powders to promote better adhesion of the coating at lower temperatures. Lower temperatures better retain the nano structure during the sintering process. The mixed coatings may be deposited from a suspension containing the mixture of powders and deposited simultaneously on to a substrate. Other benefits of applying a mixture of materials include mechanically alloying the coating, dilute and isolated particle distributions, enhanced bonding to the substrate at lower temperatures and controlled Thermal Coefficients of Expansion (TCE). Under the rule of mixtures, when 50% of component A and 50% of component B are combined and sintered, the coating would have a TCE that is the average of the respective TCE's of A and B. More than two components and other ratios of components may also be utilized and the TCE of the mixture calculated. For filter applications, such as described below in Example 8, the coating thickness is between 20 microns and 250 microns and preferably between 30 microns and 75 microns. The particles making up the coating preferably have an average particle size of from 50 nanometers to 200 nanometers and most preferably from 60 nanometers to 100 nanometers.

The carrier fluid is a liquid that evaporates essentially completely without a residue remaining dispersed in the sinterable particles. As such, the carrier fluid is substantially free of binders and viscosity enhancers. "Substantially free" means there is insufficient binder to form a compact without sintering and is nominally less than 0.05%, by volume. Preferred carrier fluids are alcohols. A most preferred alcohol for the carrier fluid is isopropanol (also referred to as isopropyl alcohol).

The suspension is formed in an inert atmosphere to prevent oxidation of the particles and because nanosized metallic particles are sometimes pyrophoric and may spontaneously ignite when exposed to air. The coating may be a mixture of different powders in which case these powders are first mixed in an inert atmosphere, such as argon. Once the powders are mixed, a carrier fluid is added to form the suspension. Nominally, equal volumes of carrier fluid and sinterable particles are utilized. However, other volume fractions may be used, dependant primarily on the method of deposition. While Brownian motion will cause the nanosized sinterable particles to remain in suspension for an extended period of time, agitation 12 is utilized to extend the period of suspension consistency. The agitation 12 may be by any effective means to maintain carrier fluid motion such as an impeller or ultrasonic vibration.

A substrate is then coated 14 with the suspension by any means suitable such as spraying, rolling dipping use of a dense doctor to blade or other method by which a thin, uniform coating thickness of about five microns maybe deposite. As described below, a sequence of coating and sintering may be repeated multiple times to achieve a desired total coating thickness. The substrate may be porous or non-porous and may have either a rough or a smooth surface finish. The substrate is formed from a material to which the sinterable particles may be sinter bonded.

One preferred substrate is a porous metal having a thickness on the order of 2.54 mm (0.1 inch) and pores with an average diameter on the order of 5µm. This substrate has sufficient strength to be handled and to withstand the rigors of an industrial process. At least one side of this substrate is coated with nanoporous particles by the method of the invention to a thickness effective to continuously coat the surface. This composite structure is effective for filtration and gas or liquid flow control on the nanoscale while having the strength and durability of a much coarser structure.

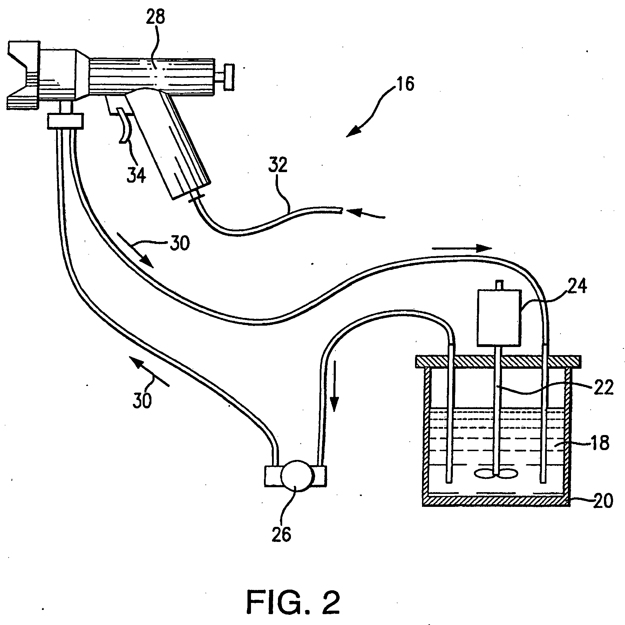

One method to deposit porous coatings utilizes the spray system 16 not according to the invention schematically illustrated in Figure 2. suspension 18 of sinterable particles in a carrier fluid is retained within a reservoir 20, such as a pressure cup. An impeller 22 driven by a motor 24 or other means maintains the suspension 18 by agitation. Recirculating pump 26 draws the suspension 18 from the reservoir 20 to a spray head 28 and returns nondeposited suspension back to reservoir 20 in the direction generally indicated by arrows 30. The system 16 is pressurized from an external high pressure source 32 such as air pressurized to 275.8 kPa (40 psi). A positive pressure of about 6.89 kPa (1 psi) is maintained in reservoir 20. Depressing trigger 34 deposits a fine spray of suspension on a substrate (not shown).

Shop air has proven to be an acceptable external high pressure source. Other, more inert gases, such as nitrogen, may be used to pressurize the spray head. The use of nitrogen should result in less oxidation of the nano powders when spraying and provide a more uniform gas delivery in terms of consistent pressures and dryer gas as compared to conventional plant shop air. While, to date, the inventors have not observed a difference between the two gas pressurization systems, in certain application, the use of a more inert gas should be a good thing.

Figure 2 illustrates a system for the spray coat deposition of nano scale particles using modified, but conventional, air spray atomization similar to that used to paint automobiles and the like. Limitations with this technique developed when depositing nano scale particles. These limitations included significant overspray and impingement of the parts by a high velocity air stream. The overspray made control of the spray area difficult and also resulted in a large amount of wasted powder. The high velocity air made it difficult to spray small parts as the parts would move under the air flow.

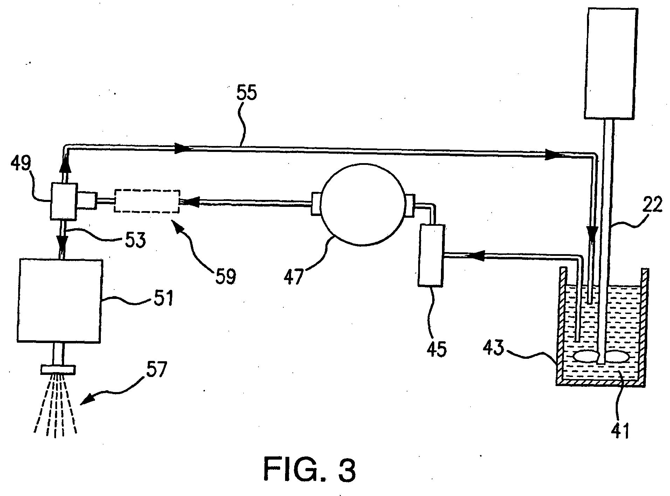

According to the present invention, however, with reference to Figure 3, switching to ultrasonic spray atomization avoids the limitations described above for air spray atomization. Instead of having a spray plume of several inches in diameter, as in air spray atomization, an ultrasonic spray nozzle produces a very small spray plume, usually less than 6.35 mm (0.25 inch), resulting in much better control over where the coatings are applied. In addition, the ultrasonic spray nozzle uses a much lower air flow running at an air pressure range of about 127 to 1524 mm (1.24 to 14.96 kPa) (5 to 60 inches H₂O (0.18 to 2.17 psi)) versus a pressure of about 206.8 kPa (30 psi) or higher for conventional air spray systems. A value of 254 mm (10 inches) H₂O works well for most coating applications and produces a gentle flow of air over the parts that does not push small parts around. When larger spray patterns are desired, the part to spray head distance is increased and, optionally, the air pressure is increased, exemplary to between 508 and 762 mm(20 and 30 inches) H₂O, to better define the spray pattern at the larger distances. A full range of 127 to 1524 mm (5 to 60 inches) H₂O for the system may likely be used dependent on the selected spray head type, distance from spray head to part and fluid delivery rate.

Exemplary operating parameters are 50.8 mm (2 inches) for the distance from the spray head to the parts being coated. This results in a spray plume diameter of about 9.5 mm (0.375 inch) on the parts. Moving the spray head closer reduces the size of the diameter of the spray plume and moving the spray head further away increases the spray plume pattern size. For the system illustrated in Figure 3, the part to spray head distance can be adjusted from about 12.7 mm (0.5 inch) to about 304.8 mm (12 inches). The power level of the ultrasonic spray head can be adjusted from 0.6 to 10 Watts. The higher the value, the more energy imparted into the spray slurry and greater levels of atomization are achieved. A setting of 6 Watts has been found to work well without generating too much heat at the spray head.

An additional benefit of ultrasonic atomization of the spray slurry is that the use of ultrasonics helps to break up agglomerates of nano particles helping to provide a smoother, denser, and more uniform coating of nano particles. This is highly desired for filtration applications or surface treatments where a smooth surface is desired.

A suspension 41 of nano particles in a carrier fluid is placed in a reservoir 43 that is continuously mixed with a mechanical impeller 22. Fluid suspension 41 is drawn from near the bottom of this reservoir 43 and fed into an ultrasonic inline agitator 45. The output of the ultrasonic inline agitator 45 is fed to the inlet of a gear pump 47. The suspension 41 is then pumped to the input of a 3-way selector valve 49. The directionality of the 3-way selector valve 49 depends on a mode of operation.

Mode 1 - Suspension 41 flow is directed to an ultrasonic spray nozzle 51 at the desired coating fluid rate (usually 3 ml/min) when coating. Fluid line 53 is kept very short (less than 25.4 to 50.8 mm (1 or 2 inches)) to minimize settling and reduce the time for the system to stabilize when the 3-way selector valve 49 is actuated.

Mode 2 - Suspension 41 flow is directed to return line 55 and directed to the fluid reservoir 43. The flow speed is increased to about 10 ml/min when not coating to remove any air bubbles in the system and to minimize settling of fluid throughout the fluid path.

The ultrasonic inline agitator 45 is placed in the fluid path of the suspension 41 to impart highly focused ultrasonic energy into the suspension to break up agglomerates resulting in a more homogenous coating slurry. It uses the same technology that is used to atomize the suspension in the ultrasonic spray head 51 described above. The use of the ultrasonic inline agitator 45 helped to solve two main issues. First, it further reduced nano powder agglomeration in the coatings resulting in more dense and uniform coatings. Second, locating the ultrasonic inline agitator 51 at the input to the gear pump 47 greatly reduced fluid clogging in the gear pump 47 and provided more uniform slurry feed rates. The typical power setting that we have been using is 4 Watts. At this level, de-agglomeration appears to be adequate with minimal head build up in the device. Setting the power level too high (> 6 Watts) appears to introduce cavitations in the suspension creating air bubbles which results in air pockets in the fluid line 53. This is undesirable as these air pockets create instabilities in the spray pattern while coating parts. In addition, if cavitations are present, they greatly shortens the life of the ultrasonic agitator.

One suitable ultrasonic inline agitator 45 is the Sono-Tek Ultrasonic Inline Agitator manufactured by Sono-Tek Corporation of Milton, NY. A second ultrasonic inline agitator 59 is optionally disposed between the gear pump 47 and the 3-way selector valve 49 to further break up any agglomerates in the fluid suspension.

A suitable gear pump 47 is the Zenith C9000 Precision Gear Pump manufactured by Zenith Pumps, Monroe, NC. The pump dispenses a precise volume of fluid per shaft revolution. 0.3 ml/revolution is exemplary. A stepper motor (not shown) drives the gear pump and utilizes RS232/485 communication and/or 4 digital I/O lines (or the like) to program and control the gear pump 47 speed and direction. 3.175 mm (0.125 inch) compression fittings were fabricated to reduce the volume of internal cavities at the input and outlet of the pump. In addition, a polymer insert was installed to reduce the internal volume of the pumps input/drive shaft, again to reduce the internal cavities of the pump.

A suitable 3-way selector valve 49 is a pneumatically actuated valve manufactured by Swagelok Company, Cleveland, OH.

Exemplary operating steps when coating are: (1) reduce suspension 41 flow rate to desired rate while coating; (2) turn on ultrasonic spray nozzle 51; (3) direct suspension flow to ultrasonic spray nozzle via the 3-way valve 49; (4) wait a preset time for the spray to stabilize (usually less than 10 seconds); (5) spray parts; (6) switch 3-way valve to direct suspension to return to fluid reservoir 43; (7) turn off ultrasonic spray nozzle 51; and (8) increase suspension fluid speed to 10 ml/min or other preset value when not coating.

An exemplary clean up procedure is: (1) pull return line 55 from fluid reservoir 43 and pump suspension 41 fluid out of lines; (2) replace fluid in reservoir 43 with clean isopropyl alcohol (IPA); (3) circulate IPA through system for a couple minutes at 200 ml/min; (4) replace fluid with clean IPA and repeat above 4 times reversing direction every other time. If next operation is going to be a different alloy suspension, then all components will need to be disassembled and cleaned to reduce contamination.

Referring back to Figure 1, following coating 14, the coated substrate is heated 36 for a time and temperature effective to evaporate the carrier fluid and sinter 36 the sinterable particles to the substrate. To prevent oxidation, sintering is typically in a neutral or reducing atmosphere or under a partial vacuum. While the sintering temperature is dependent on the composition of the substrate and sinterable particles, for iron alloy or nickel alloy components, a temperature from about 649°C to about 982°C (about 1,200°F to about 1,800°F), and preferably from about 760°C to about 871°C (about 1,400°F to about 1,600°F) for a time from about 45 minutes to 4 hours, and preferably from about 1 hour to 2 hours, is suitable.

Shrinkage during the sintering process may be detected if the coating step 14 deposits a suspension layer greater than about 10 microns. Preferably, the maximum coating thickness deposited during one coating cycle is on the order of five microns. If a coating thicker than 5-10 µm (5-10 microns) is desired, multiple coating cycles may be used by repeating 38 the coating and sintering steps. For smooth substrates, complete coverage can usually be achieved with a single coating and sintering cycle. When the substrate is rough and/or porous, multiple coating cycles are typically required to achieve complete coverage. When coating a Media Grade 2 porous substrate, typically three coating cycles are required to achieve complete coverage. For a Media Grade 1 substrate, two coating cycles are usually sufficient, while for a Media Grade greater than 2, several coating cycles may be required for complete coverage. A Media Grade 1 substrate is characterized by a nominal mean flow pore size of 1 µm and a Media Grade 2 substrate is characterized by a nominal mean flow pore size of 2 µm. Most applications utilize a Media Grade 0.5 to a Media Grade 5 substrate. However, larger pore size substrates, such as Media Grade 40 or Media Grade 100 may also be coated with the coatings described herein.

Once a coating of a desired thickness has been applied and sintered, either in one or multiple cycles, the coated surface may be finished 40 by secondary operations to cause an exterior portion of the coating to be mechanically deformed. Secondary operations include pressing, rolling, or burnishing to achieve a desired surface finish and/or finer pore size control.

Heating the substrates greatly reduces the number of coating/sintering cycles needed to achieve a desired filtration efficiency. It is believed that when the porous substrate is heated and the coating is applied, the enhanced wicking action and evaporation of the isopropyl alcohol (the carrier fluid for the spray solution) creates a denser and more uniform coating. The use of heated substrates reduces the number of cycles required to coat the original pore structure and results is higher filtration efficiencies with thinner nano scale coatings. In addition, when the coatings are applied to heated substrates, the amount of time that the coating remains as a liquid on the surface of the part is greatly reduced, reducing the time available for the nano particles to re-agglomerate on/in the coatings. It is felt that this also helps to make more uniform nano scale coatings. A suitable temperature range for heated substrates is from 37.8°C to 93.3°C (100°F to 200°F) with a nominal value of about 65.6°C (150°F).

When coating the outside surface of tubes, the tubes are placed in an oven at the desired temperature and then transferred to the coating system prior to spray coating. In this embodiment, no heat is applied to tubes during the coating process. Because the tubes may cool off while transferring them from the oven to the spray system and while coating, we usually set the oven to about 11°C (20°F) higher to account for this cooling that will occur during the coating process. An alternative is to apply infra-red (IR) heating to the tubes while coating through the use of explosion proof IR strip heaters to help maintain a constant temperature of the tubes/filters while spray coating.

When coating flat components, such as disk or sheet, the parts may be placed on a porous stainless steel plate that is heated via a hot plate or the like. The use of a porous plate to support the parts serves several functions. First, the composition of the plate can be adjusted to match the alloy of the coated parts to reduce the risk of contamination and is relatively easy to clean and reuse. In addition the porous nature of the support plate causes over spray to dry immediately on contact and, as a result, there is no wicking of the coating solution to the back side of the parts being coated giving cleaner components. Further, the conductive nature of the porous metallic supporting plate aids in transferring heat to and maintaining the elevated temperature of the parts while coating. Small parts are placed directly on the hot plate and their temperature quickly rises to the desired temperature. Larger parts are preferably placed in a preheat oven and then transferred to the hot stage to maintain temperature during coating.

The temperature of the parts is monitored using a non-contact IR thermometer to ensure the desired temperature is attained and the parts are uniform in temperature.

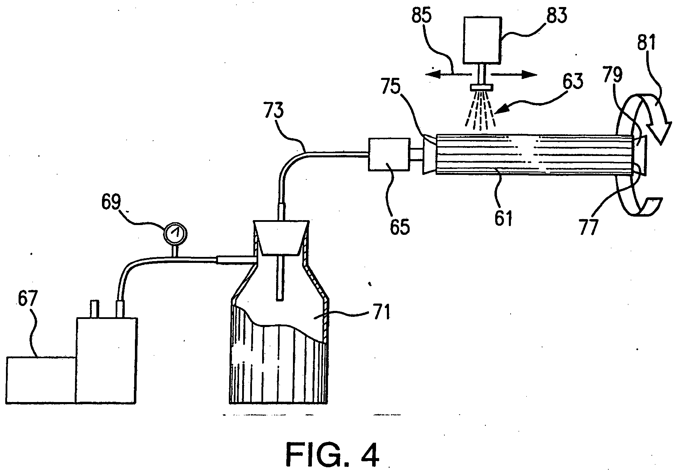

Figure 4 schematically illustrates a system for rotating a tube 61 and drawing a vacuum while spray coating 63. This technique appears to have a similar effect to heating the tubes. The coatings dried very quickly due to drawing the IPA into the substrate pores and resulted in more dense coatings. Cross section analysis of tubes coated by this system showed some evidence of nano particles being drawn into the near surface internal pores of the tubes. The level of vacuum drawn on the tubes varies by the capacity of the mechanical vacuum pump 67 and the surface area of the tube being coated. It was observed that the levels varied between 254 mm (10 inches) Hg for larger tubes and 635 mm (25 inches) Hg for smaller tubes. As the thickness of the nano coating is built up on the tubes, a noticeable increase in the vacuum level was observed suggesting that the coarser surface pores of the substrate material are being plugged with the deposited nano coating, reducing the air flow through the tubes during the coating process.

An exemplary process is: (1) mechanical pump 67 draws a vacuum to a desired negative pressure as measured by vacuum gage 69; (2) a liquid trap 71 is installed between the vacuum pump 67 and the part 61 to be coated to prevent liquids from entering the vacuum pump 67 and causing damage; (3) a rotary air/vacuum fitting 65 is attached to the vacuum line 73 and to a first end 75 of the tube 61 or part to be coated. An opposing second end 77 of the tube 61 is plugged 79 to force air to be drawn through the porous surface uf the tube 61; (4) tube rotation 81 about a longitudinal axis of the tube is turned on as well as heating of the tube if desired; (5) the spray system is enabled and the spray head 83 shuttles 85 a length of the tube 61 to coat its exterior surface; (6) when the surface pores begin to be plugged with the fine coating, a rise in the vacuum level of the system will be observed via vacuum gage 69; shut down the system, remove the tube 61 and sinter bond the applied coating; and (8) repeat until the desired total coating thickness is reached, typically requires three coating/sintering cycles.

For medical and bio-pharmaceutical markets, a sterilizing filter, useful to remove microbes such as bacteria and viruses from a liquid or gas medium, requires a pore size of under 0.2 µm (0.2 micron). Typical applications for sterilizing grade filters include various implantable devices, filters to prevent plugging of catheters (IV filters), syringe filters, manual and automated drug delivery devices, medical instrumentation, sparging devices for cell culture processing, gas flow restrictor devices for gas delivery in life-critical systems, and bio-pharmaceutical vent filters.

While the method of the invention deposits a nano power coating from a suspension having a carrier fluid that is substantially free of a binder, it is within the scope of the invention to deposit the nano powder coating and then apply a binder as a top coat over the applied coating prior to sintering.

Summarizing the concepts disclosed herein:

A method for forming a composite structure comprising the steps of (a) providing a substrate having pores with a first mean pore size and (b) forming a coating on at least one surface of said substrate, the coating having pores with a second mean pore size wherein said first mean pore size is equal to or greater than said second mean pore size, wherein coating is formed by the method for forming a porous coating on a substrate disclosed below.

The method of the preceding paragraph where the substrate is selected from materials having a Media Grade of between 0.5 and 5.

The method of the preceding paragraph where the second mean pore size is less than 0.5 micron. (1 micron = 1 µm).

The method of the preceding paragraph where the coating pores are effective to capture particulate greater than 0.2 micron.

The method of the preceding paragraph where the coating has a thickness of from 20 microns to 250 microns.

The method of the preceding paragraph where the coating has a thickness of from 30 microns to 75 microns.

The method described above where the coating is a mass of particles having an average particle size of 50 nanometers to 200 nanometers.

The method of the preceding paragraph where the coating is a mass of particles having an average particle size of 60 nanometers to 100 nanometers, the substrate and the mass of particles are both predominantly stainless steel, the substrate and the mass of particles are both predominantly titanium or the substrate and the mass of particles are sintered..

The method of the preceding paragraph where the mass of particles are sintered and formed into a filter effective to remove microbes from a fluid medium.

The method of the preceding paragraph into a flat disk or formed into a tube, and if a tube, the coating may be on an outward facing surface of said tube.

A method for forming a porous coating on a substrate, comprising the steps of:
(a) forming a suspension of sinterable particles in a carrier fluid and containing the suspension in a reservoir;
(b) maintaining the suspension by agitation in the reservoir;
(c) transferring the suspension to an ultrasonic spray nozzle;
(d) applying a first coating of the suspension to the substrate; and
(e) sintering the sinterable particles to the substrate thereby forming a coated substrate, the method further
including interposing a first ultrasonic inline agitator between said reservoir and said ultrasonic spray nozzle.

The method of the preceding paragraph including adjusting a space between an orifice of the ultrasonic spray nozzle and the substrate to be from 25.4 mm to 76.2 mm (one inch to three inches) or including interposing a pump effective to dispense a precise volume of fluid per shaft revolution between said first ultrasonic inline agitator and said ultrasonic spray nozzle.

The method of the preceding paragraph including interposing a second ultrasonic inline agitator between the pump and the ultrasonic spray nozzle.

The method of the preceding paragraph wherein the sinterable particles are selected to have an average particle size of from 50 nanometers to 200 nanometers.

The method of the preceding paragraph wherein the suspension is formed with from 10 grams per liter to 50 grams per liter of sinterable particles in a carrier fluid or the sinterable particles are selected to be stainless steel.

The method of the preceding paragraph wherein the coated substrate is effective to remove microbes from a fluid medium.

Referring to method step (d) above, the method may include heating said substrate prior to said applying step where the temperature may be of from 48.9°C to 104.4°C (20°F to 220°F) immediately prior to said applying step.

Referring to method step (d) above, the method may include heating the substrate during said applying step and the temperature may be of between 37.8°C and 93.3°C (100°F and 200°F) during said applying step.

The method of the preceding paragraph where a heat source is adjacent a first side of the substrate while the first coating is applied to an opposing second side of said substrate.

The invention described herein may be better understood by the examples that follow.

### EXAMPLES

### Example 1

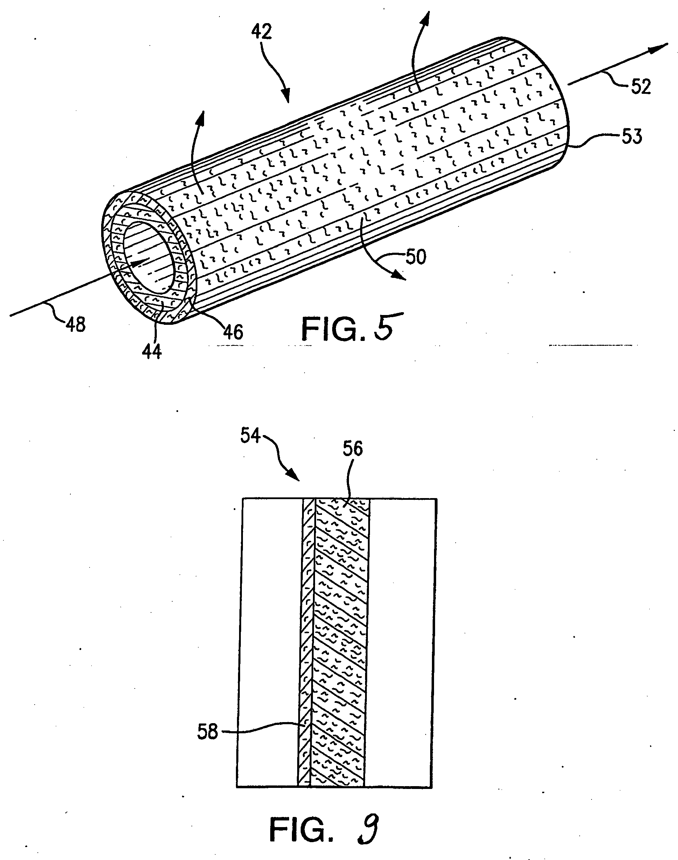

Filtration is generally performed using either cross flow or dead ended methods. In cross flow applications, only a portion of the filtrate is filtered in each pass while in dead ended applications, 100% of the fluid being filtered passes through the filter media. A process tube 42 illustrated in Figure 5 is useful for cross flow filtration and control of gas or liquid flow. The process tube 42 has a porous tubular substrate 44 with relatively large pores on the order of 5 µm. A porous coating 46 having a total coating thickness of about 25 microns and pores on the order of 50 nanometers (nm) in diameter covers the tubular substrate 44. A process gas or liquid 48 flows into the process tube 42. The filtered media 50 is sufficiently small to pass through the micropores of the porous coating 46 and exit through a wall of the process tube 42 while the waste stream 52 exits from an outlet side of the process tube. The process tube 42 depicted in Figure 5 may also be used for dead ended filtration by plugging exit end 53 of the tube, thereby forcing all of the fluid to pass through the tubular porous substrate 44 and the applied porous coating 46.

The process tube 42 was made with a tubular substrate formed from each one of 316L SS (stainless steel with a nominal composition by weight of 16-18 percent chromium, 10%-14% nickel, 2.0-3.0% molybdenum, less than 0.03% carbon and the balance iron, equally suitable is 316 SS, same composition without the restrictive limitation on carbon content), Inconel 625 (having a nominal composition by weight of 20% chromium, 3.5% niobium, and the balance nickel), and Hastelloy C276. The tubular substrate had pore sizes consistent with Media Grade 2. A slurry of Hastelloy C276 nanopowder and isopropyl alcohol was sprayed on the exterior wall of the tubular substrate to a thickness of between about 5-10 microns. Spraying was performed using an ultrasonic spray nozzle and an ultrasonic inline agitator as disclosed above. The coating was sintered to the substrate by sintering at 802°C (1,475° F) for 60 minutes in a vacuum furnace. The process was repeated two additional times to achieve a total coating thickness of about 25 microns. (25 microns = 25 µm).

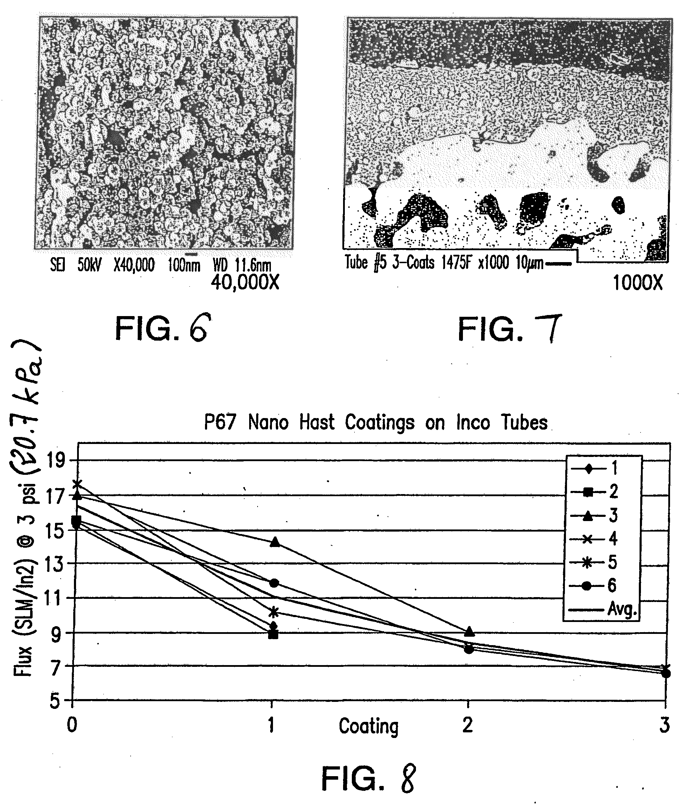

Figure 6 is a scanning electron micrograph of the nanoporous surface at a magnification of 40,000x illustrating the sintered nanoparticles and fine pores. The nanoparticles have an average diameter of about 100 nm and the nanopores have an average pore diameter of about 50 nm. Figure 7 is a scanning electron microscope at a magnification of 1,000x showing in cross-section the tubular substrate 44 and porous coating 46.

The performance of the process tube 42 was measured by determining the flux of nitrogen gas passing through the tube. The flux was measured at room temperature (nominally 22ºC) with a 20.7 kPa (3 psi) pressure drop across the tube wall. The flux units are SLM/cm² where SLM is standard liters per minute and cm² is square centimeters (SLM/in² where SLM is standard liters per minute and in² is square inches). Table 1 and Figure 8 illustrate the flux values for the process tube with from 0 to 3 nano powder coating layers. The average flux on a Media Grade 2 substrate with a total coating thickness of about 25 µm (25 microns) and average pore size of about 50 nm was 1.04 SLM/cm² (6.69 SLM/in²). This compares extremely favorably with a conventional Media Grade 0.5 (nominal mean flow pore size of 0.5 µm) process tube that has a flux of 0.29 SLM/cm² at 20.7 kPa (1.87 SLM/in² at 3 psi).

**Table 1**

| Flux | | | | | | | | | | | | | | |
|---|---|---|---|---|---|---|---|---|---|---|---|---|---|---|
| at 3 psi (20.7 kPa) | | | | | | | | | | | | | | |
| in SLM/in² or SLM/cm² as designated | | | | | | | | | | | | | | |
| | Sample Number | | | | | | | | | | | | | |
| CL | 1 | | 2 | | 3 | | 4 | | 5 | | 6 | | Average | |
| | /in² | /cm² | /in² | /cm² | /in² | /cm² | /in² | /cm² | /in² | /cm² | /in² | /cm² | /in² | /cm² |
| 0 | 15.23 | 2.36 | 15.48 | 2.40 | 17.09 | 2.65 | 17.28 | 2.68 | 17.67 | 2.74 | 15.57 | 2.41 | 16.39 | 2.54 |
| 1 | 9.34 | 1.45 | 8.84 | 1.37 | 14.38 | 2.23 | 11.70 | 1.81 | 10.17 | 1.58 | 11.86 | 1.84 | 11.05 | 1.71 |
| 2 | | | | | 9.07 | 1.41 | 8.25 | 1.28 | 8.06 | 1.25 | 7.93 | 1.23 | 8.33 | 1.29 |
| 3 | | | | | | | | | 6.81 | 1.06 | 6.56 | 1.02 | 6.69 | 1.04 |

| | | | | | | | | | | | | | | |
|---|---|---|---|---|---|---|---|---|---|---|---|---|---|---|
| CL = Number of Coating Layers | | | | | | | | | | | | | | |

### Example 2

Figure 9 illustrates in cross-sectional representation a membrane 54 useful in the production of hydrogen for fuel cell applications. A microporous substrate 56 is coated with a nanocoating 58 of palladium or platinum or their alloys. The substrate pore size is on the order of from 1 to 40 microns and more preferably from 1 to 10 microns. The coating include pores with diameters of from about 50 nm to 10 microns. Subsequent layers may be deposited onto the nanocoating such as by plating or layered deposition to generate an active surface for hydrogen generation.

### Example 3

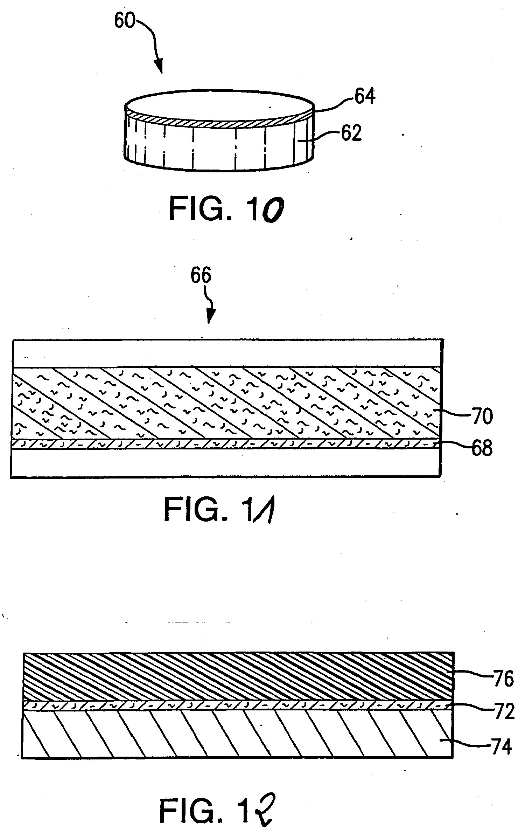

Figure 10 illustrates a particle retention barrier 60 effective to stop aluminum oxide beads from passing through a liquid chromatography column. The particle retention barrier 60 includes a microporous frit 62 that is typically formed from stainless steel, Hasfelloy or titanium powders. Frit 62 has a diameter on the order of 2.08 mm (0.082 inch) (Media Grade 0.5 to 2). A nano powder layer 64, usually of the same composition as the frit, coats one side of the frit 62. The barrier 60 is formed by micropipetting or spraying a suspension of nano powder onto the surface and then vacuum sintering.

### Example 4

Figure 11 illustrates a component 66 for improved catalytic performance. A nano powder layer 68 of platinum or other catalytic material coats a surface of a metal or ceramic support 70 for use in a catalytic converter, for industrial applications and/or automotive uses.

### Example 5

Figure 12 illustrates a nano powder coating 72 applied to a surface of a substrate 74 to increase the surface area and provide locking pores for a polymer adhesive 76 thereby dramatically increasing the strength of the adhesive bond.

### Example 6

An example of creating a dilute distribution of isolated particles in a coating would be to create a 1:100 mixture of platinum particles in a stainless steel powder and then depositing this mixtur onto a stainless steel substrate and sinter bonding. In this example, which would apply to a catalyst coating for fuel cell applications, one ends up with isolated platinum particles in a stainless steel surface. Here the stainless steel powder in the coating becomes indistinguishable from the substrate and the dilute platinum particles from the original coating are distributed over the surface of the substrate.

### Example 7

An example of bonding stainless steel to a substrate at lower temperatures would be to mix a lower temperature melting powder like tin with stainless steel 316 L SS powder that has a much higher melting temperature, coating the substrate with this mixture, and then follow up with sintering. The lower temperature component (tin) would diffuse at much lower temperatures than the stainless steel thus causing sintering and bonding at lower temperatures.

### Example 8

A sterilizing filter, useful to remove microbes such as bacteria and viruses from a liquid or gas medium requires a pore size effective to capture microbes greater than 0.2 micron. Filter sterilization discs were made by the ultrasonic spray deposition process described above and their effectiveness to remove bacteria evaluated. The operating parameters were:
- 47mm diameter disks with 25.4 mm (1 inch) MG2 stainless steel filter inserts
- Heated Substrate: 65.6°C (150F)
- Spray head speed: 50 mm/sec
- Spray Head Distance: 63.5 mm (2.5 inches)
- Fluid flow rate: 3 ml/min
- Ultrasonic energy levels (Spray gun 6-Watts, Agitator 4-Watts)
- Suspension: 25 grams of 316L SS powder in 1 liter of IPA
- 2 Spray coats, Sintered, Repeated 5 times
- Sintering Temperature: 732°C (1350 F)
- Typical IPA bubble point > 508 mm Hg (>20 inch Hg)
- Typical Water bubble point: > 762 mm Hg (>30 inch Hg)
- IPA Flow Rate: 1.13 mL/min/cm² @ 68.9 kPa (10 psi)
- Nitrogen Flow Rate: 410 mL/min/cm² @ 68.9 kPa (10 psi)
- LRV Efficiencies: > 7 LRV (@ 0.2 micron particle size, LRV = Log Reduction Value)
- Microbial retention ASTM F838-05 or equivalent: Passed

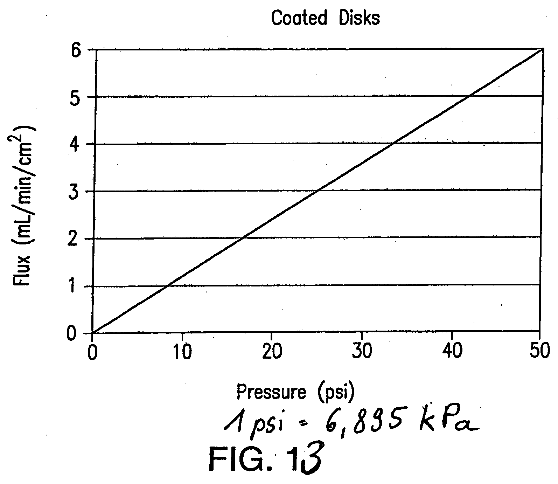

**Table 3 - See Figure 13**

| | | | | Corrected | |
|---|---|---|---|---|---|
| Pressure | | Temperature | Flow | Flow Flux | |
| kPa | psi | °C | cm³ / min. | standard cm³ / min | mL/min/cm³ |
| 0 | 0 | 0 | 0 | 0 | 0 |
| 17.2 | 2.5 | 20.82 | 1.27 | 1.30 | 0.26 |
| 34.5 | 5 | 20.90 | 2.69 | 2.75 | 0.54 |
| 68.9 | 10 | 21.16 | 5.65 | 5.71 | 1.13 |
| 103.4 | 15 | 21.18 | 8.85 | 8.95 | 1.77 |
| 137.9 | 20 | 21.13 | 11.76 | 11.90 | 2.35 |
| 172.4 | 25 | 21.09 | 14.88 | 15.08 | 2.98 |
| 344.7 | 50 | 20.89 | 30.23 | 30.84 | 6.09 |

Liquid IPA Flow Data for 47mm disk assemblies

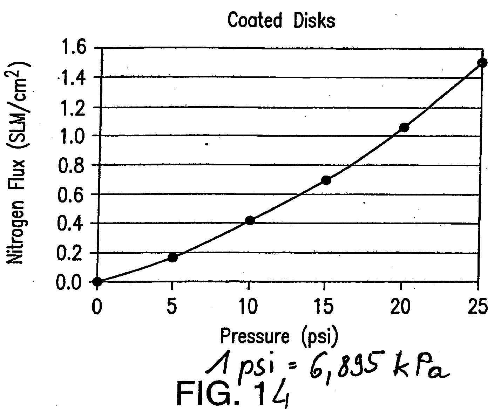

**Table 4 - See Figure 14**

| Pressure | | Flow (SLM) | | | | | | | Flux |
|---|---|---|---|---|---|---|---|---|---|
| kPa | psi | Disk 1 | Disk 3 | Disk 5 | Disk 6 | Disk 8 | Disk 15 | Avg. | SLM/cm² |
| 0 | 0 | 0 | 0 | 0 | 0 | 0 | 0 | 0 | 0.00 |
| 34.5 | 5 | 0.8 | 0.8 | 0.9 | 0.9 | 0.8 | 0.8 | 0.83 | 0.16 |
| 68.9 | 10 | 2.1 | 2 | 2.2 | 2.4 | 1.8 | 2 | 2.08 | 0.41 |
| 103.4 | 15 | 3.6 | 3.4 | 3.7 | 4 | 3.1 | 3.4 | 3.53 | 0.70 |
| 137.9 | 20 | 5.4 | 5.2 | 5.6 | 6.2 | 4.6 | 5.2 | 5.37 | 1.06 |
| 172.4 | 25 | 7.7 | 7.3 | 7.9 | 8.8 | 6.5 | 7.3 | 7.58 | 1.50 |

| | | | | | | | | | |
|---|---|---|---|---|---|---|---|---|---|
| Nitrogen gas flow data for 47mm disk assemblies | | | | | | | | | |

For microbial retention testing per ASTM F838-05, all equipment was sterilized / disinfected prior to use. All testing was conducted in a laminar flow hood. Prior to processing each filter, a control was prepared by filtering a minimum of 100 mL of sterile buffer through the test filter. One hundred milliliters of filtrate was aseptically collected downstream of the test filter in a sterile container. The filtrate was filtered using a microbial retentive filter. The microbial retentive filter was placed onto Plate Count Agar and allowed to incubate at 30±2°C for 7 days. A 48 hour pre-count was performed on each filter.
After the control was processed, the test filter was challenged with approximately 3x10⁷ to 5x10⁷ CFU/100mL of *B. diminuta*. One hundred milliliters of filtrate was aseptically collected downstream of the test filter in a sterile container. The filtrate was filtered using a microbial retentive filter. The microbial retentive filter was placed onto Plate Count Agar and allowed to incubate at 30±2°C for 7 days. A 48 hour pre-count was performed on each filter. Table 2 sets out the effectiveness of the sterilizing filters produced herein:

**Table 2**

| Sample Description | CFU/100mL (CFU = Colony Forming Units) | | Bacterial Retention of Challenge Organism |
|---|---|---|---|
| | Test | Control | |
| Disc #1 | 0 | 0 | Pass |
| Disc #3 | 0 | 0 | Pass |
| Disc #5 | 0 | 0 | Pass |
| Disc #6 | 0 | 0 | Pass |
| Disc #8 | 0 | 0 | Pass |
| Disc #15 | 0 | 0 | Pass |

### Example 9

A high efficiency filter for removing impurities from a gas or liquid medium utilizes depth filtration processes. An example of this would be to apply a relatively thick coating on the order of 200 microns on to a supporting substrate that utilizes the depth filtration technique to capture the very fine particulate/microbes for this kind of filtration. To build up this thickness, several thinner layers would be applied and sintered as described in the application to minimize shrinkage cracks during the sintering process.

### Example 10

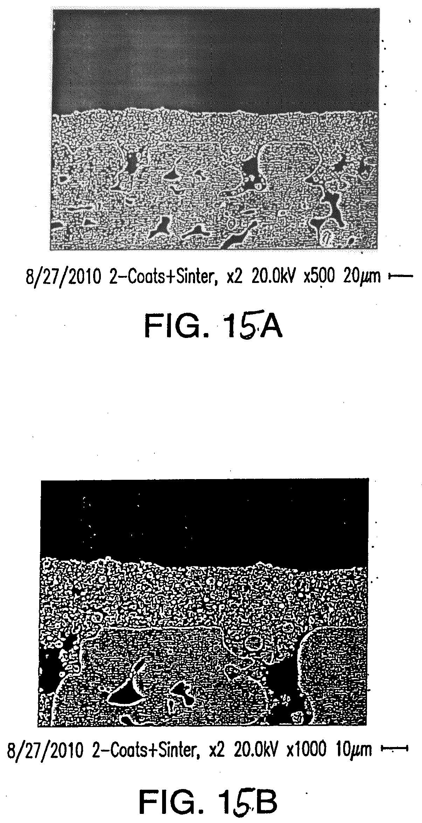

Figures 15A and 15B are cross-sectional images at magnifications of 500 times and 1000 times, respectively, of a Media Grade 2 substrate coated with 316L stainless steel nanoparticles according to the method illustrated in Figure 3. The operating parameters were:
- Heated Substrate: 65.6°C (150F)
- Spray head speed: 50 mm/sec
- Spray Head Distance: 63.5 mm (2.5 inches)
- Fluid flow rate: 3 ml/min
- Ultrasonic energy levels (Spray gun 6-Watts, Agitator 4-Watts)
- Suspension: 25 grams of 316L SS powder in 1 liter of IPA
- 2 Spray coats, Sintered, 2 additional spray coats and sintered.
- Sintering Temperature: 774°C (1425 F)
- Typical IPA bubble point >508 mm HG (> 20 inches Hg)
- No flow data Available

### Example 11

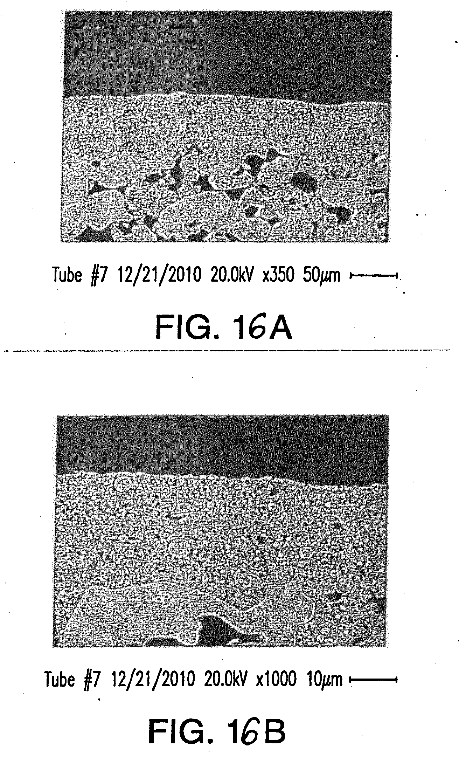

Figures 16A and 16B are cross-sectional images at magnifications of 350 times and 1000 times, respectively, of a Media Grade 2 tubular substrate coated with 316L stainless steel nanoparticles according to the method illustrated in Figure 4. The operating parameters were:
- 12.7 mm (½ inch) OD MG2 Tubes x 65.6 mm (5 inches) long
- Alloy 316L SS
- Tubes heated to 71.1°C (160F) prior to coating
- Rotation speed: 100 RPM
- Spray head speed: 3 mm/sec
- Spray Head Distance: 50.8 mm (2.0 inches)
- Fluid flow rate: 3 ml/min
- Ultrasonic energy levels (Spray gun 6-Watts, Agitator 4-Watts)
- Suspension: 25 grams of 316L SS powder in 1 liter of IPA
- 2 spray passes and then sintered, repeated three more times
- Total coating thickness: 30-60 microns
- Sintering temperature: 824°C (1515F)
- Typical IPA bubble point: >508 mm Hg (>20 inch Hg)
- Typical Water bubble point: >762 mm HG (>30 inch Hg)
- IPA Flow Rate: 0.89 mL/min/cm² @ 68.9 kPa (10 psi)
- Nitrogen Flow Rate: 590 mL/min/cm² @ 68.9 kPa (10 psi)
- LRV Efficiencies 9 to 12 log @ 0.2 micron particles

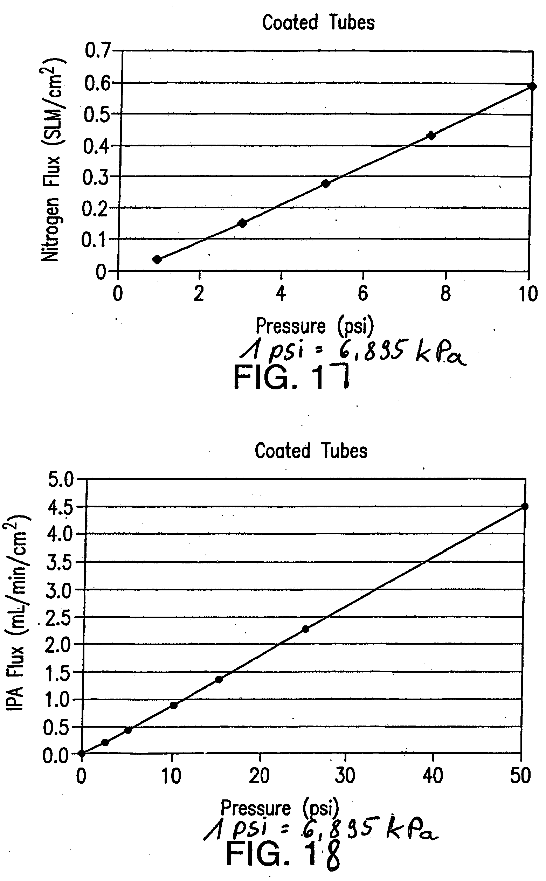

Figure 17 graphically illustrate nitrogen gas flow for 12.7 mm (0.5 inch) outside diameter coated tubes and Figure 18 graphically illustrates IPA liquid flow for the same tubes.

### Example 12

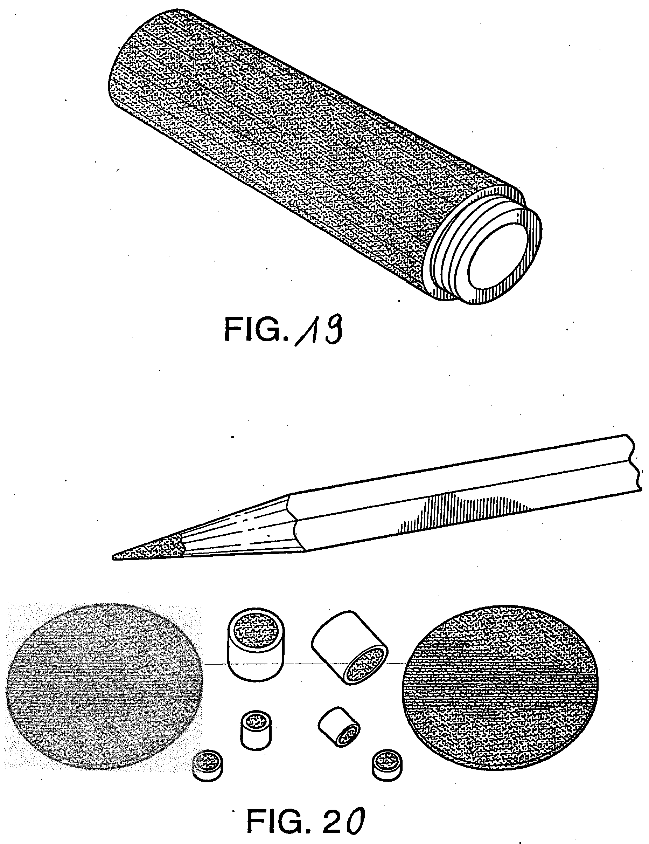

Figure 19 is a photograph of a 254 mm (10 inch) Bio-Pharmaceutical Vent Filter for Sterilizing Grade Applications made from 316L stainless steel and nanoparticles according to the method illustrated in Figure 4. The operating parameters were:
- 63.5 mm (2½ inch) ISO Pressed Tubes or Rolled & Welded Cartridges welded to a 226 interface flange
- Alloy 316L SS
- Substrate Media Grade: 2
- Tubes heated to 71.1°C (160F) prior to coating
- Rotation speed: 100 RPM
- Spray head speed: 2 mm/sec
- Spray Head Distance: 38.1 mm (1.5 inches)
- Fluid flow rate: 5 ml/min
- Air pressure 10"H₂O
- Ultrasonic energy levels (Spray gun 6-Watts, Agitator 4-Watts)
- Suspension: 25 grams of 316L SS powder in 1 liter of IPA
- 1 spray passes and then reheated to 71.1°C (160F) followed a second spray coat
- Spray coating and sintering cycle repeated three times
- Total coating thickness: 30-75 microns
- Sintering temperature: 815.6°C (1500F) in hydrogen
- Furnace: Sinterite Belt furnace running at 152.4 mm/minute (6 inches/min)

### Example 13

Figure 20 is a photograph of several Small Parts for Sterilizing Grade Filtration for use in Medical devices made from 316L stainless steel and nanoparticles according to the method illustrated in Figure 3. The operating parameters were:
- Parts: Disks and/or sleeved restrictors
- Substrate material: 316L Stainless Steel
- Heated Substrate: 65.6°C (150F)
- Spray head speed: 50 mm/sec
- Spray Head Distance: 63.5 mm (2.5 inches)
- Fluid flow rate: 3 ml/min
- Ultrasonic energy levels (Spray gun 6-Watts, Agitator 4-Watts)
- Suspension: 25 grains of 316L SS 80-100µm average particle size powder in 1 liter of IPA
- 2 Spray coats, Sintered, 2 additional spray coats and sintering cycles.
- Sintering Temperature: 773.9°C (1425 F)
- Sintering Atmosphere: Hydrogen
- Sintering Time: 60 minutes

The above products of Examples 12 ands 13 may be fabricated using titanium as well. The same process is followed except we change the materials to titanium and sinter in an Argon atmosphere.

## Claims

1. A method for forming a porous coating on a substrate, comprising the steps of:
(a) forming a suspension (41) of sinterable particles in a carrier fluid and containing said suspension (41) in a reservoir (43);
(b) maintaining said suspension (41) by agitation in said reservoir (43);
(c) transferring said suspension (41) to an ultrasonic spray nozzle (51);
(d) applying (57) a first coating of said suspension (41) to said substrate; and
(e) sintering (36) said sinterable particles to said substrate thereby forming a coated substrate,
the method being **characterized by** interposing a first ultrasonic inline agitator (45) between said reservoir (43) and said ultrasonic spray nozzle (51).

2. The method of claim 1 including adjusting a space between an orifice of said ultrasonic spray nozzle (51) and said substrate to be from 25.4 mm to 76.2 mm.

3. The method of claim 1 including interposing a pump (47) effective to dispense a precise volume of fluid per shaft revolution between said first ultrasonic inline agitator (45) and said ultrasonic spray nozzle (51).

4. The method of claim 3 including interposing a second ultrasonic inline agitators (59) between said pump (47) and said ultrasonic spray nozzle (51).

5. The method of any of the preceding claims wherein said sinterable particles are selected to have an average particle size of from 50 nanometers to 200 nanometers.

6. The method of any of the preceding claims wherein said suspension (41) is formed with from 10 grams per liter to 50 grams per liter of sinterable particles in a carrier fluid.

7. The method of any of the preceding claims wherein said sinterable particles are selected to be stainless steel.

8. The method of any of the preceding claims wherein said coated substrate is effective to remove microbes from a fluid medium.

9. The method of any of the preceding claims including heating said substrate prior to said applying step.

10. The method of claim 9 including heating said substrate to a temperature of from 48.9°C to 104.4°C immediately prior to said applying step.

11. The method of any of the preceding claims including heating said substrate during said applying step.

12. The method of claim 11 including maintaining said substrate at a temperature of between 37.8°C and 93.3°C during said applying step.

13. The method of any of claims 9 to 12 wherein a heat source is adjacent a first side of said substrate while said first coating is applied to an opposing second side of said substrate.

14. A method for forming a composite structure, comprising the steps of
(a) providing a substrate having pores with a first mean pore size; and
(b) forming a coating on at least one surface of said substrate, said coating having pores with a second mean pore size wherein said first mean pore size is equal to or greater than said second mean pore size,
the method being **characterized in that** said coating is formed by a method as claimed in any one of claims 1 to 13.

## Patentansprüche

1. Verfahren zum Bilden einer porösen Beschichtung auf einem Substrat, wobei das Verfahren folgende Schritte aufweist:
(a) Bilden einer Suspension (41) aus sinterbaren Partikeln in einem Trägerfluid und Aufnehmen der Suspension (41) in einem Reservoir (43);
(b) Halten der Suspension (41) unter Bewegung in dem Reservoir (43);
(c) Transferieren der Suspension (41) zu einer Ultraschall-Sprühdüse (51);
(d) Aufbringen (57) einer ersten Beschichtung der Suspension (41) auf das Substrat; und
(e) Sintern (36) der sinterbaren Partikel auf das Substrat, um dadurch ein beschichtetes Substrat zu bilden,
wobei das Verfahren **gekennzeichnet ist durch** Zwischenschalten eines ersten Ultraschall-Inline-Mischers (45) zwischen dem Reservoir (43) und der UI-traschall-Sprühdüse (51).

2. Verfahren nach Anspruch 1,
das das Einstellen eines Raums zwischen einer Öffnung der Ultraschall-Sprühdüse (51) und dem Substrat auf 25,4 mm bis 76,2 mm beinhaltet.

3. Verfahren nach Anspruch 1,
das das Zwischenschalten einer Pumpe (47), die zum Abgeben eines genauen Fluidvolumens pro Wellenumdrehung in der Lage ist, zwischen dem ersten Ultraschall-Inline-Mischer (45) und der Ultraschall-Sprühdüse (51) beinhaltet.

4. Verfahren nach Anspruch 3,
das das Zwischenschalten eines zweiten Ultraschall-Inline-Mischers (59) zwischen die Pumpe (47) und die Ultraschall-Sprühdüse (51) beinhaltet.

5. Verfahren nach einem der vorhergehenden Ansprüche,
wobei die sinterbaren Partikel derart ausgewählt werden, dass sie eine mittlere Partikelgröße von 50 Nanometer bis 200 Nanometer aufweisen.

6. Verfahren nach einem der vorhergehenden Ansprüche,
wobei die Suspension (41) mit 10 Gramm pro Liter bis 50 Gramm pro Liter an sinterbaren Partikeln in einem Trägerfluid gebildet wird.

7. Verfahren nach einem der vorhergehenden Ansprüche,
wobei die sinterbaren Partikel aus rostfreiem Stahl gewählt werden.

8. Verfahren nach einem der vorhergehenden Ansprüche,
wobei das beschichtete Substrat zum Entfernen von Mikroben aus einem Fluidmedium wirksam ist.

9. Verfahren nach einem der vorhergehenden Ansprüche,
das das Erwärmen des Substrats vor dem Schritt des Aufbringens beinhaltet.

10. Verfahren nach Anspruch 9,
das das Erwärmen des Substrats auf eine Temperatur von 48,9 °C bis 104,4 °C unmittelbar vor dem Schritt des Aufbringens beinhaltet.

11. Verfahren nach einem der vorhergehenden Ansprüche,
das das Erwärmen des Substrats während des Schrittes des Aufbringens beinhaltet.

12. Verfahren nach Anspruch 11,
das das Halten des Substrats auf einer Temperatur zwischen 37,8 °C und 93,3 °C während des Schrittes des Aufbringens beinhaltet.

13. Verfahren nach einem der Ansprüche 9 bis 12,
wobei eine Wärmequelle einer ersten Seite des Substrats benachbart ist, während die erste Beschichtung auf eine gegenüberliegende zweite Seite des Substrats aufgebracht wird.

14. Verfahren zum Bilden einer Verbundstruktur, das folgende Schritte aufweist:
(a) Bereitstellen eines Substrats mit Poren mit einer ersten mittleren Porengröße; und
(b) Bilden einer Beschichtung auf mindestens einer Oberfläche des Substrats, wobei die Beschichtung Poren mit einer zweiten mittleren Porengröße aufweist, wobei die erste mittlere Porengröße gleich der oder größer als die zweite mittlere Porengröße ist,
wobei das Verfahren **dadurch gekennzeichnet ist, dass** die Beschichtung durch ein Verfahren nach einem der Ansprüche 1 bis 13 gebildet wird.

## Revendications

1. Procédé pour former un revêtement poreux sur un substrat, comprenant les étapes dans lesquelles :
(a) on forme une suspension (41) de particules frittables dans un fluide de transport et on introduit ladite suspension (41) dans un réservoir (43);
(b) on maintient ladite suspension (41) par agitation dans ledit réservoir (43) ;
(c) on transfère ladite suspension (41) à une buse de pulvérisation ultrasonique (51) ;
(d) on applique (57) une première couche de ladite suspension (41) sur ledit substrat ; et
(e) on applique par frittage (36) lesdites particules frittables sur ledit substrat pour ainsi obtenir un substrat revêtu ;
le procédé étant **caractérisé par** le fait d'intercaler un premier agitateur ultrasonique en ligne (45) entre ledit réservoir (43) et ladite buse de pulvérisation ultrasonique (51).

2. Procédé selon la revendication 1, englobant le fait de régler l'espace ménagé entre un orifice de ladite buse de pulvérisation ultrasonique (51) et ledit substrat à une valeur qui se situe entre 25,4 mm et 76,2 mm.

3. Procédé selon la revendication 1, englobant le fait d'intercaler une pompe (47) dont la fonction est de distribuer un volume précis de fluide par révolution d'arbre entre ledit premier agitateur ultrasonique en ligne (45) et ladite buse de pulvérisation ultrasonique (51).

4. Procédé selon la revendication 3, englobant le fait d'intercaler un deuxième agitateur ultrasonique en ligne (59) entre ladite pompe (47) et ladite buse de pulvérisation ultrasonique (51).

5. Procédé selon l'une quelconque des revendications précédentes, dans lequel lesdites particules frittables sont choisies de façon à posséder une granulométrie moyenne entre 50 nm et 200 nm.

6. Procédé selon l'une quelconque des revendications précédentes, dans lequel on obtient ladite suspension (41) avec de 10 g par litre à 50 g par litre de particules frittables dans un fluide de transport.

7. Procédé selon l'une quelconque des revendications précédentes, dans lequel lesdites particules frittables sont choisies pour être en acier inoxydable.

8. Procédé selon l'une quelconque des revendications précédentes, dans lequel ledit substrat revêtu est efficace pour éliminer les microbes d'un milieu fluide.

9. Procédé selon l'une quelconque des revendications précédentes, englobant le fait de chauffer ledit substrat avant ladite étape d'application.

10. Procédé selon la revendication 9, englobant le chauffage dudit substrat à une température de 48,9 °C à 104,4 °C directement avant ladite étape d'application.

11. Procédé selon l'une quelconque des revendications précédentes, englobant le fait de chauffer ledit substrat au cours de ladite étape d'application.

12. Procédé selon la revendication 11, englobant le fait de maintenir ledit substrat à une température entre 37,8 °C et 93,3 °C au cours de ladite étape d'application.

13. Procédé selon l'une quelconque des revendications 9 à 12, dans lequel une source de chaleur est adjacente à un premier côté dudit substrat, tandis que l'on applique ladite première couche sur un deuxième côté opposé dudit substrat.

14. Procédé pour l'obtention d'une structure composite, comprenant les étapes dans lesquelles :
(a) on procure un substrat possédant des pores comprenant une première dimension moyenne des pores ; et
(b) on forme une couche sur au moins une surface dudit substrat, ladite couche possédant des pores comprenant une deuxième dimension moyenne des pores, ladite première dimension moyenne des pores étant égale ou supérieure à ladite deuxième dimension moyenne des pores, le procédé étant **caractérisé en ce qu'**on obtient ledit revêtement via un procédé selon l'une quelconque des revendications 1 à 13.
